# EUROPÄISCHE PATENTSCHRIFT

(11) **EP 1 788 260 B1**
(45) Veröffentlichungstag und Bekanntmachung des Hinweises auf die Patenterteilung: **04.08.2010**
(21) Anmeldenummer: 06023722.9
(22) Anmeldetag: 15.11.2006
(51) Int. Cl.: F16B 7/06, F41H 5/04

(54) **Baugruppen- und/oder Modul-Verbinder**
Connector for component and/or module
Connecteur pour composante et/ou module

(30) Priorität: 18.11.2005 DE 102005055502
(43) Veröffentlichungstag der Anmeldung: 23.05.2007
(73) Patentinhaber: Rheinmetall Landsysteme GmbH, 24107 Kiel (DE)
(72) Erfinder: Hass, Frank, 24235 Wendtorf (DE); Wintjen, Jan, 24229 Schwedeneck (DE); Wolff, Achim, 24159 Kiel (DE)
(74) Vertreter: Dietrich, Barbara

(56) Entgegenhaltungen:
- EP-A1- 0 587 356
- DE-A1- 2 427 169
- FR-A1- 2 651 815
- US-A- 3 858 846
- US-A- 5 156 482
- US-B1- 6 327 829

## Beschreibung

Die Erfindung betrifft einen Verbinder zur lösbaren Verbindung von Baugruppen eines sich aus diesen Baugruppen modular zusammensetzbaren Fahrzeuges.

Ein aus mehreren unterschiedlichen Baugruppen oder Modulen zusammensetzbares Fahrzeug ist beispielsweise aus der DE 10 2004 006 819 A1 bekannt. Dabei besteht das dort offenbarte geschützte Fahrzeug im Wesentlichen aus einem Hauptmodul (Sicherheitszelle), einem Front- und einem Heckmodul. Die Verbindung der Module miteinander erfolgt über Bolzenverbindungen.

Bei handelsüblichen Container-LKW werden genormte Verbindungselemente eingesetzt, um die Container auf dem Auflieger zu fixieren. Beim firmeneigenen "Boxer" wird das Missionsmodul auf dem Fahrmodul fixiert, indem über Passstücke Fest- und Loslager geschaffen werden.

Insbesondere die Containerfixierungen weisen jedoch eine große Bauform auf.

Der Erfindung liegt die Aufgabe zugrunde, einen Verbinder zur lösbaren Verbindung von Baugruppen anzugeben, der insbesondere einen kleinen Bauraum benötigt.

Diese Aufgabe wird erfindungsgemäß durch die Merkmale des Anspruchs 1 gelöst. Weitere, besonders vorteilhafte Ausgestaltungen der Erfindung offenbaren die Unteransprüche.

Die Erfindung geht bei der sich gestellten Aufgabe auch von der Tatsache aus, dass diese Verbinder als Modulverbinder räumlich in die Bausteine oder Module integrierbar und horizontal zusammensteckbar sein sollten. Bevorzugt ist zudem die Selbstzentrierung und Formschlüssigkeit vorzusehen. Als weiteres Merkmal muss die Verbindung auch bei starker Verschmutzung lösbar sein.

Der erfindungsgemäße Verbinder umfasst im Wesentlichen zwei mit den zu verbindenden Baugruppen kraftschlüssig verbindbare Einsatzteile, auch als Spanner-Aufnehmer bezeichnet, sowie wenigstens einen in entsprechende Ausnehmungen bzw. Aufnahmebohrungen der Spanner-Aufnehmer einsetzbaren Spanner. Dieser kann in einer ersten Variante aus zwei Spannschrauben und eine die beiden Spannschrauben miteinander verbindende Spannhülse mit gegenläufigen Gewinden sein, so dass die beiden Spannschrauben bei Drehung der Spannhülse zueinander hingezogen oder voneinander weggedrückt werden. In einer weiteren Variante ist ein Doppel-Kegelbolzen einsetzbar. Dies hat den Vorteil, dass er einfacher zu fertigen ist.

Außerdem weist mindestens eine der beiden Spanner-Aufnahme auf der der jeweils anderen Spanneraufnahme zugewandten Seite mindestens einen Stehbolzen auf, weicher beim Verbinden der benachbarten Baugruppen in eine entsprechende Aufnahmebohrung der anderen Spanneraufnahme axial einführbar ist und an der Seitenwand der Aufnahmebohrung formschlüssig anliegt.

Durch eine kegelförmige Ausgestaltung des Sterbolzens des jeweiligen Spanneraufnahme und der entsprechenden Aufnahmebohrung der jeweils anderen Spanneraufnahme wird auf einfache Weise eine selbst zentrierende Anordnung des Verbinders erreicht. Der Doppel-Kegelbolzen wird hingegen bevorzugt mit zylinderförmigen Führungsteilen ergänzt. Damit wird erreicht, dass bei Montage der Bausteine frühzeitig eine formschlüssige Führung hergestellt wird. Die zylinderförmigen Flächen sind mit einer Spielpassung versehen. Im zusammengebauten Zustand werden die Kräfte zwischen den Bausteinen weiterhin über die kegelförmigen Flächen übertragen.

Vorzugsweise soll der Kegelwinkel des Stehbolzens und der entsprechenden Aufnahmebohrung > 3° betragen, um ein "Festsaugen" des Stehbolzens in der Aufnahmebohrung zu vermeiden. Außerdem sind die Aufnahmebohrungen mit Entlüftungsbohrungen versehen, damit der Stehbolzen nicht durch ein beim Einschieben in die Aufnahmebohrung entstehendes Vakuum festgehalten wird, wenn er später aus der Aufnahmebohrung wieder entfernt werden soll.

Bei einer besonders Platz sparenden Ausführungsform eines erfindungsgemäßen Verbinders sind die Spannschrauben jeweils mit einem abgeflachten Kopfteil mit schrägen Seitenflächen versehen, wobei die schrägen Seitenflächen bei der bestimmungsgemäßen Verwendung der Spannschrauben an komplementären Flächen der das Kopfteil der Spannschrauben aufnehmenden Ausnehmung der zugeordneten Einsätze anliegen.

Bei einem Verbinder zum Verbinden von Fahrzeugmodulen hat es sich als vorteilhaft erwiesen, dass die Einsatzteile derart an den miteinander zu verbindenden Bauteilen anordbar sind, dass nach dem Spannvorgang die Spannkraft im wesentlichen nur durch die Stehbolzen aufgenommen wird und die einander zugewandten Seiten der Einsätze einen vorgegebenen Abstand voneinander aufweisen.

Besonders kompakt lasst sich der erfindungsgemäße Verbinder aufbauen, wenn die Einsatzteile U-förmig ausgebildet sind und eine etwa trapezförmige Mantelfläche besitzen. Dabei bildet der jeweilige Stehbolzen eine Verlängerung des einen Schenkels, und die Aufnahmebohrung befindet sich in dem zweiten Schenkel des U-förmigen Einsatzteiles. Die Ausnehmung zwischen den beiden Schenkeln ist derart ausgebildet, dass in einem ersten Bereich das Kopfteil der jeweiligen Spannschraube und in einem zweiten Bereich der Schaft der entsprechenden Spannschraube anordbar sind. Dabei ist die Breite des zweiten Bereiches der Ausnehmung derart gewählt, dass im gespannten Zustand auch mindestens ein Teilbereich der Spannhülse von der Ausnehmung aufgenommen wird.

Ein weiterer Vorteil des erfindungsgemäßen Baugruppen-Verbinders liegt darin, dass mit diesem auf einfache Weise entsprechende Verbindungen hergestellt als auch wieder gelöst werden können, ohne dass hierzu spezielle Sonderwerkzeuge erforderlich sind.

Um ein Herausfallen des noch nicht festgeschraubten Spanners zu verhindern, insbesondere wenn es sich um die Spannverbindung an der Unterseite der Wanne handelt, kann eine Lasche an den Spanneraufnahmen vorgesehen werden, wobei die Laschen eine Über-Kopf-Montage der unteren Spanner erleichtern.

Weitere Einzelheiten und Vorteile der Erfindung ergeben sich aus den folgenden anhand von Figuren erläuterten Ausführungsbeispielen. Es zeigen:
- Fig. 1: eine Explosionsdarstellung eines ersten erfindungsgemäßen Verbinders;
- Fig. 2: einen Längsschnitt durch zwei getrennt angeordnete und jeweils mit einem Einsatzteil versehene zu verbindende Baugruppen und
- Fig. 3: die beiden in Fig.2 dargestellten Baugruppen nach ihrem Verbinden mit dem erfindungsgemäßen Verbinder,
- Fig. 4: eine Explosionsdarstellung eines weiteren erfindungsgemäßen Verbinder,
- Fig. 5: eine teilweise Explosionsdarstellung eines dritten erfindungsgemäßen Verbinders.

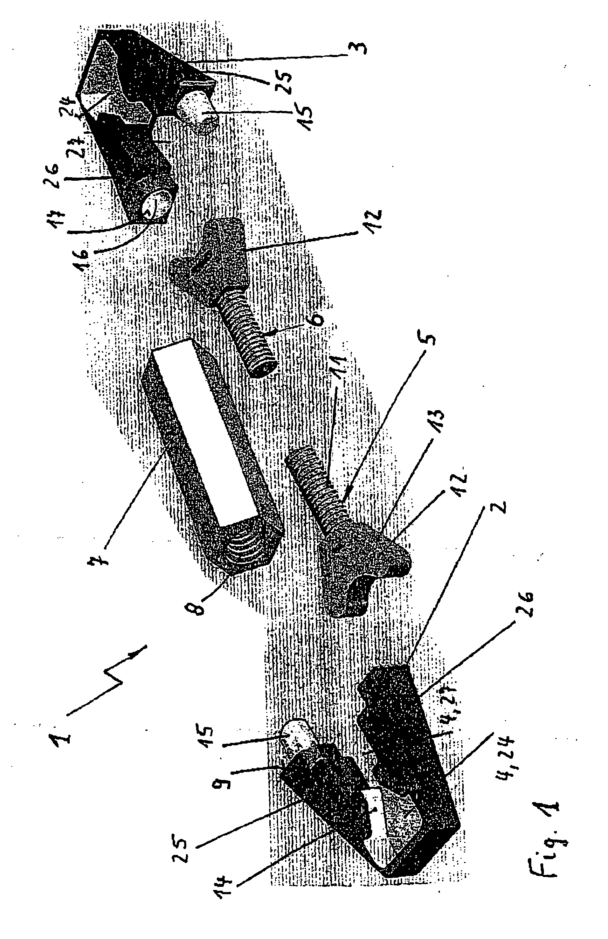

In Fig. 1 ist mit 1 ein erfindungsgemäßer Verbinder zur lösbaren Verbindung von Baugruppen oder Modulen bezeichnet. Der Verbinder 1 umfasst in diesem Ausführungsbeispiel zwei mit den zu verbindenden Baugruppen kraftschlüssig zu verbindende Einsatzteile 2 und 3, die nachfolgend als Spanneraufnahmen bezeichnet werden, zwei in entsprechende Ausnehmungen 4 der Spanneraufnahmen 2, 3 einsetzbare Spannschrauben 5 und 6 und eine die beiden Spannschrauben 5 und 6 miteinander verbindende Spannhülse 7 mit gegenläufigen Gewinden 8, so dass die beiden Spannschrauben 5, 6 bei Drehung der Spannhülse 7 zueinander hingezogen oder voneinander weggedrückt werden.

Dabei können die Spanneraufnahmen 2, 3, die Spannschrauben 5, 6 und die Spannhülse 7 je nach Belastung aus hochfestem Vergütungsstahl bestehen.

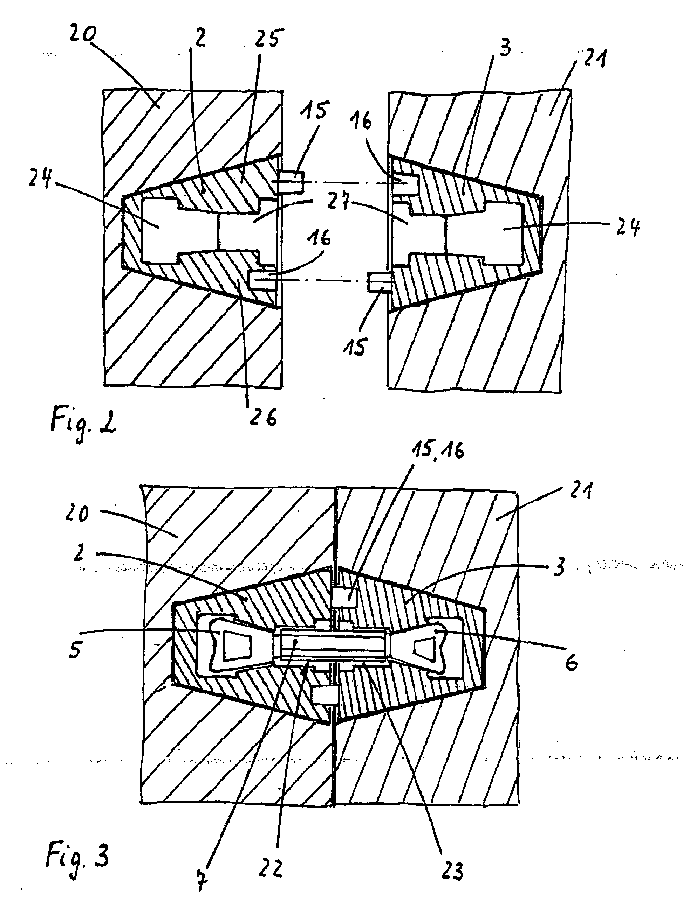

Die Spanneraufnahmen 2, 3 sind U-förmig ausgebildet und weisen eine etwa trapezförmige Mantelfläche auf, wobei in einem ersten Bereich 24 der durch die beiden Schenkel 25, 26 umschlossenen Ausnehmung 4 zur Aufnahme der Spannschraube 5, 6 das Kopfteil 12 und in einem zweiten Bereich 27 der Schaft 11 der jeweiligen Spannschraube 5, 6 anordbar ist. Dabei ist die Breite des zweiten Bereiches 27 der Ausnehmung 4 derart gewählt, dass im gespannten Zustand mindestens ein Teilbereich der Spannhülse 7 von der Ausnehmung 4 aufgenommen wird (vgl. auch Fig.3).

Der jeweils erste Bereich 24 der Ausnehmungen 4 der Spanneraufnahmen 2, 3 ist derart ausgebildet, dass bei Drehung der Spannhülse 7 ein Mitdrehen der Spannschrauben 5, 6 sicher vermieden wird.

Die Spannschrauben 5, 6 besitzen jeweils ein abgeflachtes Kopfteil 12 mit schrägen Seitenflächen 13, wobei die schrägen Seitenflächen 13 bei der bestimmungsgemäßen Verwendung der Spannschrauben 5, 6 an komplementären Flächen 14 des ersten Bereiches 24 der Ausnehmung 4 der zugeordneten Spanneraufnahmen 2, 3 anliegen, so dass beim Anziehen der Spannhülse 7 eine automatische Zentrierung der Spannschrauben 5, 6 erfolgt.

Die Spanneraufnahmen 2, 3 weisen jeweils auf ihrer der anderen Spanneraufnahme 2, 3 zugewandten Seite einen Stehbolzen 15 auf, welcher beim Verbinden benachbarter Baugruppen in eine entsprechende Aufnahmebohrung 16 der gegenüberliegenden Spanneraufnahme 3, 2 axial einführbar ist und an der Seitenwand 17 der Aufnahmebohrung 16 formschlüssig anliegt, derart, dass die Spannhülse 7 seitlich zwischen den beiden Stehbolzen 15 angeordnet ist und sich parallel zu den Längsachsen der Stehbolzen 15 erstreckt. Dabei bildet der jeweilige Stehbolzen 15 eine Verlängerung des einen Schenkels 25, und die Aufnahmebohrung 16 befindet sich in dem zweiten Schenkel 26 des jeweiligen U-förmigen Einsatzteiles 2, 3.

Der jeweilige Stehbolzen 15 und die zugehörige Aufnahmebohrung 16 sind kegelförmig ausgestaltet, wobei der Kegelwinkel des Stehbolzens 15 und der entsprechenden Aufnahmebohrung 16 > 3° betragen soll, um ein "Festsaugen" des Stehbolzens 15 in der Aufnahmebohrung 16 zu vermeiden. Außerdem sind die Aufnahmebohrungen 16 mit Entlüftungsbohrungen 18 versehen, damit der Stehbolzen 15 nicht durch ein beim Einschieben in die Aufnahmebohrung 16 entstehendes Vakuum festgehalten wird. Die Kegelbohrungen 16 führen dabei vorzugsweise in das Innere des entsprechenden Bausteins.

Die Fig. 2 und 3 zeigen ein Anwendungsbeispiel des erfindungsgemäßen Verbinders 1. Dabei sollen beispielsweise zwei nicht im Einzelnen dargestellte Baugruppen 20, 21 eines Fahrzeuges miteinander verbunden werden. Bei der mit 20 bezeichneten Baugruppe kann es sich beispielsweise um das Frontmodul und bei der mit 21 bezeichneten Baugruppe um die Sicherheitszelle des entsprechenden Fahrzeuges handeln.

Die z.B. gefrästen Spanneraufnahmen 2, 3 des Verbinders 1 sind in die entsprechenden Baugruppen 20, 21 derart beispielsweise eingeschweißt, dass die Baugruppen 20, 21 vorzugsweise horizontal miteinander verbunden werden können.

Ausgehend von der in Fig.2 dargestellten Anordnung werden die beiden Baugruppen 20, 21 relativ zueinander horizontal verschoben, so dass die kegelförmig ausgebildeten Stehbolzen 15 der Spanneraufnahmen 2, 3 in die gegenüber angeordneten Aufnahmebohrungen 16 der jeweils anderen Spanneraufnahme 2, 3 eingeschoben werden und eine formschlüssige Verbindung in Bezug auf vertikal und quer auf die Baugruppen 20, 21 angreifenden Kräfte herstellen.

Anschließend wird der bereits vormontierte, aus den beiden (vorzugsweise mit Trapezgewinden versehenen) Spannschrauben 5, 6 und der Spannhülse 7 bestehende Spanner 22 in die aus den Ausnehmungen 4 bestehende Spanneraufnahme 23 eingelegt und die Spannhülse 7 mittels eines Schraubenschlüssels (nicht dargestellt) angezogen, so dass die Spannschrauben 5, 6 sich aufeinander zu drehen und die Baugruppen 20, 21 in Fahrzeuglängsrichtung miteinander verbunden werden. Dabei wird die Spannkraft im Wesentlichen nur über die kegelförmig ausgebildeten Stehbolzen 15 aufgenommen, während die Spanneraufnahmen 2, 3 und die Baugruppen 20, 21 sich nicht berühren.

Die Erfindung ist selbstverständlich nicht auf das vorstehend beschriebene Ausführungsbeispiel beschränkt. So können beispielsweise zur Verbindung zweier Baugruppen eines Fahrzeuges mehrere (z.B. vier) Verbinder verwendet werden, die parallel zueinander angeordnet werden.

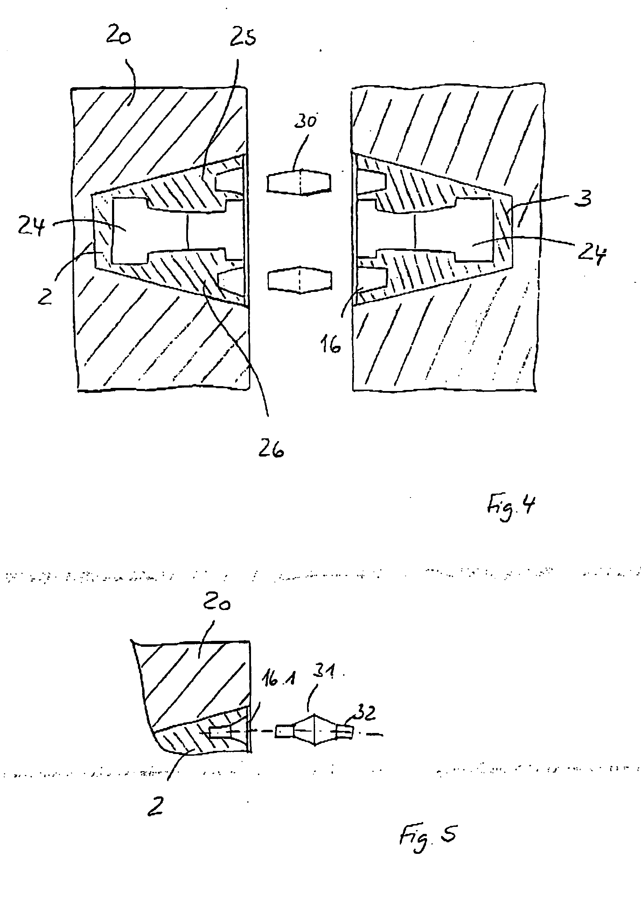

So zeigt Fig. 4 eine weitere Spann-Verbindung, welche mittels eines einfachen Doppel-Kegelbolzen 30 geschaffen werden, die anstelle der Stehbolzen 15 etc. in die Aufnahmebohrungen 16.1 der Spanneraufnahmen 2, 3 greifen.

Eine weitere und bevorzugte Variante stellt Fig. 5 dar. Hier wird ein Doppel-Kegelbolzen 31 mit zusätzlichen Führungsteilen 32, vorzugsweise zylinderförmigen, ergänzt, wodurch erreicht wird, dass bei Montage frühzeitig eine formschlüssige Führung hergestellt wird. Die zylindrischen Flächen sind mit einer Spielpassung versehen. Entsprechend weisen die Spannaufnahmen 2, 3 eine andere Form der Aufnahmebohrung 16.2 zur Aufnahme der Doppel-Kegelbalzen 31 auf.

Die Verbinder können bei zusammengebauten Baugruppen zusätzlich mit Blechen abgedeckt werden. Bei entsprechender Anordnung dieser Abdeckbleche schützen diese die Verbinder zusätzlich gegen Verschmutzung und sonstigen mechanischen Beschädigungen und wirken als Verdrehsicherung der Spannhülsen.

### Bezugszeichenliste

- 1: Verbinder
- 2,3: Einsatzteile
- 4: Ausnehmung
- 5,6: Spannschrauben
- 7: Spannhülse
- 8: Gewinde
- 9: Grundfläche

- 11: Schaft
- 12: Kopfteil
- 13: Seitenfläche
- 14: Fläche
- 15: Stehbolzen
- 16,16.1,16.2: Aufnahmebohrung
- 17: Seitenwand
- 18: Entlüftungsbohrung

- 20,21: Baugruppen
- 22: Spanner
- 23: Spanneraufnahme
- 24: erster Bereich
- 25, 26: Schenkel
- 27: zweiter Bereich

- 30: Doppel-Kegelbolzen
- 31: Doppel-Kegelbolzen mit Führungsteil
- 32: Führungsteil

## Patentansprüche

1. Verbinder zur lösbaren Verbindung von Baugruppen (20, 21) eines sich aus diesen Baugruppen (20, 21) modular zusammensetzbaren Fahrzeuges, mit den Merkmalen:
- der Verbinder (1) umfasst zwei mit den zu verbindenden Baugruppen (20, 21) kraftschlüssig verbindbaren Spanneraufnahmen (2, 3), zwei in entsprechende Ausnehmungen (4) der Spanneraufnahmen (2, 3) einsetzbare Spannschrauben (5, 6) und eine die beiden Spannschrauben (5, 6) miteinander verbindende Spannhülse (7) mit gegenläufigen Gewinden, so dass die beiden Spannschrauben (5, 6) bei Drehung der Spannhülse (7) zueinander hingezogen oder voneinander weggedrückt werden.

2. Verbinder nach Anspruch 1, **dadurch gekennzeichnet, dass** mindestens eines der beiden Spanneraufnahmen (2, 3) auf der der jeweils anderen Spanneraufnahme (2, 3) zugewandten Seite mindestens einen Stehbolzen (15) aufweist, welcher beim Verbinden der benachbarten Baugruppen (20, 21) in eine entsprechende Aufnahmebohrung (16) des anderen Spanneraufnahmen (2, 3) axial einführbar ist und an der Seitenwand (17) der Aufnahmebohrung (16) formschlüssig anliegt.

3. Verbinder nach Anspruch 1, **dadurch gekennzeichnet, dass** die Spanneraufnahmen (2, 3) wenigstens eine Aufnahmebohrung (16.1) für die Aufnahme eines Doppel-Kegelbolzens (30) aufweisen.

4. Verbinder nach Anspruch 1, **dadurch gekennzeichnet, dass** die Spanneraufnahmen (2, 3) wenigstens eine Aufnahmebohrung (16.2) für die Aufnahme eines Doppel-Kegelbolzens (31) mit Führungsteil (32) aufweisen.

5. Verbinder nach einem der vorgenannten Ansprüche 1 bis 4, **dadurch gekennzeichnet, dass** die Spanneraufnahmen (2, 3) U-förmig ausgebildet sind, wobei die jeweilige Ausnehmung (4) zwischen den beiden Schenkeln (25, 26) der U-förmigen Einsatzteile (2, 3) angeordnet ist, und dass die Ausnehmung (4) einen ersten Bereich (24) zur Aufnahme des Kopfteiles (12) und einen zweiten Bereich (27) zur Aufnahme des Schaftes (11) der zugeordneten Spannschraube (5, 6) aufweist, wobei die Breite des zweiten Bereiches (27) der Ausnehmung (4) derart gewählt ist, dass mindestens ein Teil der Spannhülse (7) von dem zweiten Bereich (27) aufgenommen wird.

6. Verbinder nach einem der Ansprüche 1 bis 5, **dadurch gekennzeichnet, dass** die Spanneraufnahmen (2, 3) eine im wesentlichen trapezförmige Mantelfläche aufweisen.

7. Verbinder nach Anspruch 1 oder 2, **dadurch gekennzeichnet, dass** der jeweilige Stehbolzen (15) eine Verlängerung des einen Schenkels (25) der U-förmigen Spanneraufnahme (2, 3) bildet und die Aufnahmebohrung (16) sich in dem zweiten Schenkel (26) des jeweiligen U-förmigen Einsatzteiles (2, 3) befindet.

8. Verbinder nach einem der Ansprüche 1 oder 2 oder 7, **dadurch gekennzeichnet, dass** beide Spanneraufnahmen (2, 3) jeweils einen Stehbolzen (15) und eine an den Stehbolzen (15) der jeweils anderen Spanneraufnahmen (2, 3) angepasste Aufnahmebohrung (16) aufweisen.

9. Verbinder nach einem der Ansprüche 1 bis 8, **dadurch gekennzeichnet, dass** die Aufnahmebohrung (16.16.1) kegelförmig ausgebildet sind.

10. Verbinder nach Anspruch 9, **dadurch gekennzeichnet, dass** die Kegelwinkel des Stehbolzens (15) oder Doppel-Kegelbolzens (30) und der entsprechenden Aufnahmebohrung (16,16.1)>3° betragen.

11. Verbinder nach einem der vorgenannten Ansprüche 1 bis 10, **dadurch gekennzeichnet, dass** in die Aufnahmebohrungen (16,16.1, 16.2) Entlüftungsbohrungen (18) münden.

12. Verbinder nach einem der Ansprüche 1 bis 11, **dadurch gekennzeichnet, dass** die Spannschrauben (5. 6) jeweils mit einem abgeflachten Kopfteil (12) mit schrägen Seitenflächen (13) versehen sind, wobei die schrägen Seitenflächen (13) bei der bestimmungsgemäßen Verwendung der Spannschrauben (5, 6) an komplementären Flächen des ersten Bereiches (24) der jeweiligen Ausnehmung (4) der zugeordneten Spanneraufnahmen (2, 3) anliegen.

13. Verbinder nach einem der Ansprüche 1 bis 12, **dadurch gekennzeichnet, dass** die Spanneraufnahmen (2, 3) derart an den miteinander zu verbindenden Baugruppen (20, 21) anordbar sind, dass nach dem Spannvorgang die Spannkraft im wesentlichen nur von den Bolzen (15, 30, 31) aufgenommen wird und die einander zugewandten Seiten der Spanneraufnahmen (2, 3) einen vorgegebenen Abstand voneinander aufweisen.

14. Verbinder nach einem der Ansprüche 1 bis 13, **dadurch gekennzeichnet, dass** die Spannschrauben (5, 6) und die Spannhülse (7) ein Trapezgewinde besitzen.

15. Verbinder nach einem der Ansprüche 1 bis 14, **dadurch gekennzeichnet, dass** die Spanneraufnahmen (2, 3) und/oder die Spannschrauben (5, 6) und/oder die Spannhülse (7) aus hochfestem Vergütungsstahl bestehen können.

## Claims

1. Connector for the detachable connection of assemblies (20, 21) of a vehicle, which can be modularly assembled from these assemblies (20, 21), having the following features:
- the connector (1) comprises two turnbuckle receptacles (2, 3), which are non-positively connectable to the assemblies (20, 21) to be connected, two tensioning screws (5, 6), which are insertable into corresponding recesses (4) of the turnbuckle receptacles (2, 3), and a tensioning sleeve (7), which connects the two tensioning screws (5, 6) to one another, having opposing threads, so that the two tensioning screws (5, 6) are drawn toward one another or pressed away from one another upon rotation of the tensioning sleeve (7).

2. Connector according to Claim 1, **characterized in that** at least one of the two turnbuckle receptacles (2, 3) has at least one stud pin (15) on the side facing towards the particular other turnbuckle receptacle (2, 3), which is axially insertable into a corresponding receptacle hole (16) of the other turnbuckle receptacle (2, 3) upon connection of the adjacent assemblies (20, 21) and presses positively against the side wall (17) of the receptacle hole (16).

3. Connector according to Claim 1, **characterized in that** the turnbuckle receptacles (2, 3) have at least one receptacle hole (16.1) for receiving a double-cone pin (30).

4. Connector according to Claim 1, **characterized in that** the turnbuckle receptacles (2, 3) have at least one receptacle hole (16.2) for receiving a double-cone pin (31) having guide part (32).

5. Connector according to one of preceding Claims 1 to 4, **characterized in that** the turnbuckle receptacles (2, 3) are implemented as U-shaped, the particular recess (4) being situated between the two legs (25, 26) of the U-shaped insert parts (2, 3), and the recess (4) has a first area (24) for receiving the head part (12) and a second area (27) for receiving the shaft (11) of the assigned tensioning screws (5, 6), the width of the second area (27) of the recess (4) being selected in such a manner that at least a part of the tensioning sleeve (7) is received by the second area (27).

6. Connector according to one of Claims 1 to 5, **characterized in that** the turnbuckle receptacles (2, 3) have an essentially trapezoidal lateral surface.

7. Connector according to Claim 1 or 2, **characterized in that** the particular stud pin (15) forms an extension of one leg (25) of the U-shaped turnbuckle receptacle (2, 3) and the receptacle hole (16) is located in the second leg (26) of the respective U-shaped insert part (2, 3).

8. Connector according to one of Claims 1 or 2 or 7, **characterized in that** both turnbuckle receptacles (2, 3) each have one stud pin (15) and one receptacle hole (16), which is adapted to the stud pin (15) of the respective other turnbuckle receptacle (2, 3).

9. Connector according to one of Claims 1 to 8, **characterized in that** the receptacle holes (16, 16.1) are implemented as conical.

10. Connector according to Claim 9, **characterized in that** the taper angle of the stud pin (15) or double-cone pin (30) and the corresponding receptacle hole (16, 16.1) is > 3°.

11. Connector according to one of preceding Claims 1 to 10, **characterized in that** ventilation holes (18) open into the receptacle holes (16, 16.1, 16.2).

12. Connector according to one of Claims 1 to 11, **characterized in that** the tensioning screws (5, 6) are each provided with a flattened head part (12) having bevelled lateral surfaces (13), the bevelled lateral surfaces (13) pressing against complementary surfaces of the first area (24) of the particular recess (4) of the assigned turnbuckle receptacles (2, 3) upon correct use of the tensioning screws (5, 6).

13. Connector according to one of Claims 1 to 12, **characterized in that** the turnbuckle receptacles (2, 3) can be situated on the assemblies (20, 21) to be connected to one another in such a manner that after the tensioning procedure, the tensioning force is essentially absorbed only by the pins (15, 30, 31) and the sides of the turnbuckle receptacles (2, 3) facing towards one another have a predetermined spacing from one another.

14. Connector according to one of Claims 1 to 13, **characterized in that** the tensioning screws (5, 6) and the tensioning sleeve (7) have a trapezoidal thread.

15. Connector according to one of Claims 1 to 14, **characterized in that** the turnbuckle receptacles (2, 3) and/or the tensioning screws (5, 6) and/or the tensioning sleeve (7) may comprise high-strength tempered steel.

## Revendications

1. Connecteur pour l'assemblage démontable de composants (20, 21) d'un véhicule à assembler de façon modulaire à partir de ces composants (20, 21), présentant les caractéristiques suivantes :
- le connecteur (1) comprend deux logements de tendeur (2, 3) pouvant être assemblés par complémentarité de force aux deux composants à connecter (20, 21), deux vis de tension (5, 6) à insérer dans des évidements correspondants (4) des logements de tendeur (2, 3) et une douille de tension (7) avec des filets de sens opposé, reliant l'une à l'autre les deux vis de tension (5, 6) de telle manière que les deux vis de tension (5, 6) soient tirées l'une vers l'autre ou soient écartées l'une de l'autre par rotation de la douille de tension (7).

2. Connecteur selon la revendication 1, **caractérisé en ce qu'**au moins un des deux logements de tendeur (2, 3) présente, sur le côté orienté vers l'autre logement de tendeur (2, 3), au moins un goujon d'entretoisement (15) qui, lors de l'assemblage des composants voisins (20, 21), peut être introduit axialement dans un alésage de réception correspondant (16) de l'autre logement de tendeur (2, 3) et qui s'applique en complémentarité de forme sur la paroi latérale (17) de l'évidement (16).

3. Connecteur selon la revendication 1, **caractérisé en ce que** les logements de tendeur (2, 3) présentent au moins un alésage de réception (16.1) pour recevoir un goujon à double cône (30).

4. Connecteur selon la revendication 1, **caractérisé en ce que** les logements de tendeur (2, 3) présentent au moins un alésage de réception (16.2) pour recevoir un goujon à double cône (31) avec partie de guidage (32).

5. Connecteur selon l'une quelconque des revendications 1 à 4, **caractérisé en ce que** les logements de tendeur (2, 3) sont réalisés en forme de U, dans lequel l'évidement respectif (4) est disposé entre les deux branches (25, 26) des pièces rapportées en forme de U (2, 3), et **en ce que** l'évidement (4) présente une première zone (24) destinée à recevoir la partie de tête (12) et une deuxième zone (27) destinée à recevoir la tige (11) de la vis de tension associée (5, 6), dans lequel la largeur de la deuxième zone (27) de l'évidement (4) est choisie de telle manière qu'au moins une partie de la douille de tension (7) soit logée dans la deuxième zone (27).

6. Connecteur selon l'une quelconque des revendications 1 à 5, **caractérisé en ce que** les logements de tendeur (2, 3) présentent une surface latérale essentiellement trapézoïdale.

7. Connecteur selon la revendication 1 ou 2, **caractérisé en ce que** le goujon d'entretoisement respectif (15) forme un prolongement d'une première branche (25) du logement de tendeur (2, 3) en forme de U et l'alésage de réception (16) se trouve dans la deuxième branche (26) de la pièce rapportée en forme de U respective (2, 3).

8. Connecteur selon l'une quelconque des revendications 1 ou 2 ou 7, **caractérisé en ce que** les deux logements de tendeur (2, 3) présentent respectivement un goujon d'entretoisement (15) et un alésage de réception (16) adapté au goujon d'entretoisement (15) respectivement de l'autre logement de tendeur (2, 3).

9. Connecteur selon l'une quelconque des revendications 1 à 8, **caractérisé en ce que** l'alésage de réception (16, 16.1) est de forme conique.

10. Connecteur selon la revendication 9, **caractérisé en ce que** les angles de conicité du goujon d'entretoisement (15) ou du goujon à double cône (30) et des alésages de réception respectifs (16, 16.1) sont > 3°.

11. Connecteur selon l'une quelconque des revendications 1 à 10, **caractérisé en ce que** des alésages d'aération (18) débouchent dans les alésages de réception (16, 16.1, 16.2).

12. Connecteur selon l'une quelconque des revendications 1 à 11, **caractérisé en ce que** les vis de tension (5, 6) sont respectivement dotées d'une partie de tête aplatie (12) avec des faces latérales obliques (13), dans lequel les faces latérales obliques (13) sont appliquées, lors de l'utilisation prévue des vis de tension (5, 6), sur des faces complémentaires de la première zone (24) de l'évidement respectif (4) des logements de tendeur associés (2, 3).

13. Connecteur selon l'une quelconque des revendications 1 à 12, **caractérisé en ce que** les logements de tendeur (2, 3) peuvent être agencés sur les composants (20, 21) à assembler l'un à l'autre, de telle manière qu'après l'opération de tension, la force de tension ne soit reprise essentiellement que par les goujons (15, 30, 31) et que les faces tournées l'une vers l'autre des logements de tendeur (2, 3) présentent une distance prédéterminée l'une par rapport à l'autre.

14. Connecteur selon l'une quelconque des revendications 1 à 13, **caractérisé en ce que** les vis de tension (5, 6) et la douille de tension (7) présentent un filet trapézoïdal.

15. Connecteur selon l'une quelconque des revendications 1 à 14, **caractérisé en ce que** les logements de tendeur (2, 3) et/ou les vis de tension (5, 6) et/ou la douille de tension (7) peuvent être constitués d'un acier de traitement à haute résistance.
